# EUROPÄISCHE PATENTSCHRIFT

(11) **EP 0 358 069 B1**
(45) Veröffentlichungstag und Bekanntmachung des Hinweises auf die Patenterteilung: **28.07.1993**
(21) Anmeldenummer: 89115779.4
(22) Anmeldetag: 26.08.1989
(51) Int. Cl.: H01M 2/18

(54) **Scheider für Starterbatterien**
Separator for starter batteries
Séparateur pour batterie de démarrage

(30) Priorität: 09.09.1988 DE 3830728; 10.02.1989 DE 3903977
(43) Veröffentlichungstag der Anmeldung: 14.03.1990
(73) Patentinhaber: Grace GmbH, D-22844 Norderstedt (DE)
(72) Erfinder: Böhnstedt, Werner, Dr., D-2359 Henstedt-Ulzburg 3 (DE); Lindenstruth, Werner, D-2085 Quickborn (DE)
(74) Vertreter: UEXKÜLL & STOLBERG

(56) Entgegenhaltungen:
- WO-A-81/00176
- DE-A- 2 500 475
- FR-A- 458 462
- FR-A- 2 251 921
- LU-A- 55 524
- US-A- 1 841 998
- JOURNAL OF POWER SOURCES, Band 23, Nr. 1-3, Mai-Juni 1988, Seiten 109-111, Elsevier Sequoia, NL; J.W. REITZ: "Update of separator technology for lead/acid batteries"

## Beschreibung

Die Erfindung betrifft einen Scheider (Separator) aus elastischem thermoplastischen Kunststoff, der zwischen den entgegengesetzt geladenen Elektrodenplatten von Blei/Schwefelsäure - Starterbatterien eingesetzt wird. Der mikroporöse Scheider verhindert Kurzschlüsse zwischen den Platten und das Herausfallen von Plattenmaterial, aufgrund seiner Porenstruktur läßt er jedoch den ionischen Stromtransport im Elektrolyten zu.

Eine übliche Starterbatterie besteht aus mehreren Zellen, die jeweils eine Mehrzahl von Elektrodenplatten und Scheidern enthalten; je Zelle können bis zu 20 Platten und Scheidern vorhanden sein. Aufgrund der Herstellungstoleranzen auftretende Dickenabweichungen der einzelnen Bauteile, d.h. sowohl der Elektrodenplatten als auch der Batteriescheider, können sich dabei addieren mit der Folge, daß erhebliche Schwankungen der Paketdicke auftreten können. Bislang hat man eine zu geringe Dicke der Pakete dadurch ausgeglichen, daß man sie mit Distanzstücken in die Zellenabteile der Batteriekästen eingesetzt hat. Diese Arbeit kann jedoch nur von Hand ausgeführt werden, was bei modernen, voll automatisierten Linien nicht mehr möglich ist, auf denen die Elektrodenplatten einer Polarität in Taschen aus dem Scheidermaterial eingehüllt, mit Elektrodenplatten der anderen Polarität zu Paketen gestapelt und diese maschinell in die Batteriekästen eingesetzt werden.

Aus der DE-PS 12 69 212 sind Batterieseparatoren mit Rippen aus elastischem Schaumstoff bekannt, welche sich unter Ausnützung der Kompressibilität der Rippen etwas zusammendrücken lassen. Wegen des hohen Widerstandes gegen eine Verformung durch Druck ist mit Hilfe derartiger Scheider aber nur ein Ausgleich sehr geringer Dickenschwankungen möglich. Es kommt hinzu, daß die Herstellung solcher Rippen nur in einem zusätzlichen Verfahrensschritt durch nachträgliches Aufbringen auf das Scheiderblatt und Aufschäumen der Rippen möglich ist, eine Integration in moderne Herstellungsverfahren, bei welchen die Scheider in Rollenform aus thermoplastischem Kunststoff durch Extrudieren und anschließendes Kalandrieren hergestellt werden, ist nicht möglich.

In der DE-PS 17 71 227 werden Scheider für alkalische Batterien beschrieben, welche Rippen ("Abstandshalter") aufweisen, welche aus einer Folie ausgestanzt und anschließend auf die Oberfläche einer geschmeidigen Scheiderfolie aufgebracht und dort befestigt werden. Gemäß einer Ausführungsform sind die Rippen auf beiden Seiten der Scheiderfolie gegeneinander versetzt angeordnet. Unter Druck nimmt ein derartiger Scheider zwischen den Elektrodenplatten eine Form an, die an Wellpappe erinnert. Dabei gelangt die Scheiderfolie auch mit der positiven Elektrodenplatte in Berührung und ist damit der Gefahr einer oxidativen Zerstörung ausgesetzt. Aufgrund der Geschmeidigkeit der Scheiderfolie tritt praktisch keine Rückstellkraft auf. Darüber hinaus weist dieser vorbekannte Batteriescheider ebenfalls den Nachteil auf, daß er nur in einem mehrstufigen Verfahren herstellbar ist.

Auf dem Markt gibt es ferner Batteriescheider aus Kunststoff-Faservlies, welche zur Versteifung eingeprägte Sicken aufweisen, die abwechselnd aus beiden Oberflächen herausgedrückt sein können. Diese Sicken dienen gleichzeitig als Abstandshalter zu den Elektrodenplatten, ähnlich wie die massiven Rippen bei üblichen Kunststoffscheidern. Beim Einbau in Batterien reicht der übliche Preßdruck nur zu einem geringfügigen Zusammendrücken der Sicken aus; bei sehr hohem Druck werden andererseits die Sicken ganz flach gedrückt, so daß das Scheiderblatt ohne Abstand an beiden Elektrodenplatten anliegt und somit keine ausreichende Säureversorgung der Elektroden mehr gewährleistet ist. Mit diesen Scheidern aus Faservlies läßt sich das Problem somit ebenfalls nicht lösen.

Ein anderer Vorschlag zur Lösung des Problems ist aus der DE-OS 31 17 917 bekannt. Nach diesem Vorschlag werden an den Wänden des Batteriekastens integral geformte nachgiebige Rippen vorgesehen, welche beim Einsetzen der Plattenpakete als federnde Abstandshalter dienen. Die Herstellung solcher Batteriekästen ist jedoch äußerst umständlich und kompliziert.

Die heute für Starterbatterien zum Eintaschen von Elektroden in großem Umfang eingesetzten Batteriescheider aus thermoplastischem Kunststoff weisen eine Blattstärke von etwa 0,15 bis 0,35 mm auf und haben integral aus dem Kunststoff geformte, massive Rippen. Auf der jeweils der positiven Elektrodenplatte zugewandten Vorderseite des Scheiders ist eine Vielzahl von Rippen angeordnet, deren Höhe größer als die Dicke des Scheiderblattes ist. Falls Rippen auch auf der jeweils der negativen Elektrodenplatte zugewandten Rückseite des Scheiders angeordnet sind, haben sie eine geringere Höhe als die Rippen auf der Vorderseite und liegen diesen zumindest teilweise Rücken an Rücken gegenüber. Bei dem unter Einbaubedingungen herrschenden Preßdruck ist die Kompressibilität dieser Scheider sehr gering, sie beträgt nur ca. 1 bis 2%, was zum Ausgleich der oben erwähnten Dickenabweichungen der Elektrodenplatten und Batteriescheider nicht ausreicht.

Der Erfindung liegt demgegenüber die Aufgabe zugrunde, die zuletzt erwähnten, vorbekannten Starterbatterie-Scheider aus thermoplastischem Kunststoff hinsichtlich ihrer Kompressibilität und Rückstellkraft so zu verbessern, daß sie zum Ausgleich der auftretenden Dickenabweichungen ausreichen, und trotzdem stets einen zur Säureversorgung notwendigen Abstand aufrechterhalten, ohne dadurch gleichzeitig ihre Herstellung zu erschweren und ohne ihre Lebensdauer unter Einsatzbedingungen zu beeinträchtigen.

Gegenstand der Erfindung ist ein Starterbatterie-Scheider der vorstehend angegebenen Art aus elastischem Kunststoff, bei welchem in Abkehr von der bisher bekannten Rippenanordnung den Rippen auf der Vorderseite des Scheiders Rippen auf der Rückseite versetzt jeweils so zugeordnet sind, daß eine Vorderseitenrippe zwischen zwei paarweise angeordneten Rückenseitenrippen oder eine Rückenseitenrippe zwischen zwei paarweise angeordneten Vorderseitenrippen verläuft, wobei der Abstand zwischen zwei paarweise angeordneten Rippen wesentlich kleiner ist als der Abstand zwischen den von jeweils drei einander zugeordneten Rippen gebildeten benachbarten Gruppen.

Vorzugsweise befindet sich die jeweils einzelne Rippe in der Mitte der auf der anderen Seite paarweise angeordneten Rippen. Die jeweils einzelnen Rippen auf der Vorder- oder Rückseite des Scheiders sind vorzugsweise in gleichen Abständen voneinander angeordnet, so daß sich nur auf der anderen Seite des Scheiders durch die dort vorgesehene paarweise Anordnung der Rippen eine ungleichmäßige Verteilung ergibt, wie sie bislang nicht bekannt ist.

Das Ausmaß der Kompressibilität und Rückstellkraft der erfindungsgemäßen Scheider läßt sich auf unterschiedliche Weise beeinflussen. Zum einen ist es möglich, nur einem Teil der Rippen auf der einen Seite des Scheiders ein Gegenrippenpaar zuzuordnen. Je weniger Gegenrippenpaare vorhanden sind, umso weniger Druck muß zum Zusammendrücken und Verformen des Scheiders aufgewandt werden. Ferner kann zur Erhöhung der Rückstellkraft die Blattstärke zwischen den paarweisen Rippen, d.h. gegenüber der einzelnen Rippe erhöht werden. Weiterhin kann man den Abstand der paarweise angeordneten Rippen voneinander variieren. Die Kompressibilität nimmt zu und die Rückstellkraft ab, wenn man den Abstand der paarweisen Rippen voneinander vergrößert. Bei Kunststoffscheidern für Starterbatterien der üblichen Scheiderblattdicke von 0,15 bis 0,35 mm beträgt der Abstand von zwei paarweise angeordneten Rippen, zwischen denen auf der anderen Seite des Scheiders eine Gegenrippe verläuft, etwa 1,2 bis 4 mm (gemessen von Rippenmitte zu Rippenmitte). Besonders bevorzugt liegt dieser Abstand bei etwa 2,5 mm und der Abstand von zwei benachbarten Gruppen von jeweils drei einander zugeordneten Rippen etwa 13 mm (gemessen von Rippenmitte zu Rippenmitte der mittleren Rippe) wenn die Scheiderblattdicke etwa 0,25 mm ist. Das Verhältnis zwischen dem Abstand von zwei paarweise angeordneten Rippen und dem Abstand von zwei benachbarten Gruppen von jeweils drei einander zugeordneten Rippen beträgt vorteilhafterweise 1:2 bis 11, vorzugsweise 1:4 bis 6, insbesondere 1:5.

Die Rippen auf der Vorderseite sind vorzugsweise so hoch, daß sich mit der Scheiderblattdicke eine Dicke von etwa 1 mm ergibt, also etwa 0,65 bis 0,85 mm. Die Rippen auf der Rückseite sind niedriger, ihre Höhe beträgt 0,1 bis 0,6 mm, vorzugsweise etwa 0,3 mm.

Batteriescheider der vorliegenden Art werden aus Polyethylen, Polypropylen oder Polyvinylchlorid unter Zusatz anorganischer Füllstoffe wie amorpher Kieselsäure hergestellt. Besonders bevorzugt sind Batteriescheider aus hochmolekularem Polyethylen, wie sie in der Praxis in großem Umfang produziert werden.

Zur näheren Erläuterung der Erfindung sollen die beiliegenden Zeichnungen dienen; es zeigen
- Figur 1: einen erfindungsgemäßen Scheider im Querschnitt,
- Figur 2: einen im Verhältnis 5:1 vergrößerten Ausschnitt des Querschnittes der Figur 1,
- Figur 3: eine andere Ausführungsform des erfindungsgemäßen Scheiders im Querschnitt,
- Figur 4: einen im Verhältnis 5:1 vergrößerten Ausschnitt des Querschnitts der Figur 3,
- Figur 5: eine weitere Ausführungsform des erfindungsgemäßen Scheiders im Querschnitt.

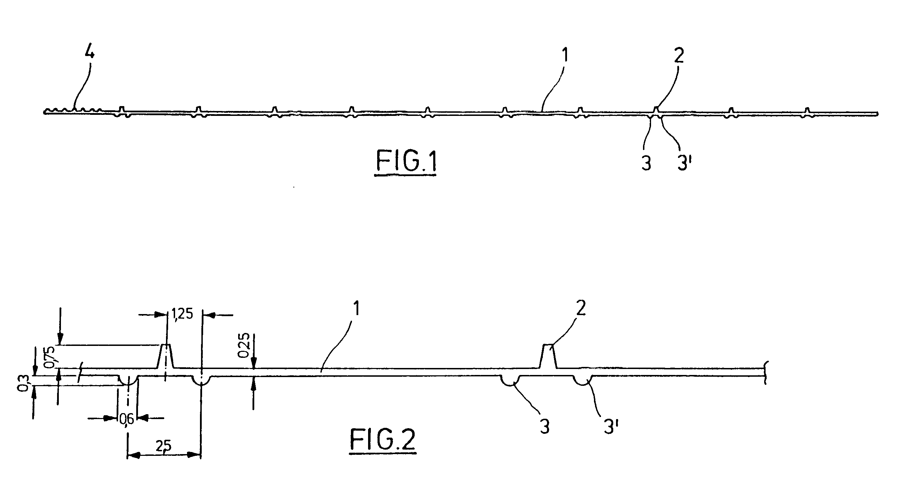

Der in Figur 1 im Querschnitt dargestellte erfindungsgemäße Scheider besteht aus einem Scheiderblatt 1, wobei die Randbereiche 4 zur Verschweißung unter Anwendung von Hitze oder Ultraschall bei der Herstellung von Taschen dienen. Auf der Vorderseite des Scheiders sind in gleichen Abständen verlaufende Rippen 2 vorgesehen. Jeder dieser Rippen 2 ist auf der Rückseite ein Paar Gegenrippen 3, 3′ zugeordnet. Wie Figur 2 zeigt, verlaufen die Rippen 2 jeweils in der Mitte der paarweise angeordneten Gegenrippen 3, 3′. Die Rippen 2 auf der Vorderseite des Scheiders, welche beim Einbau der positiven Elektrodenplatte zugewandt sind, sind deutlich höher als die Gegenrippen 3,3′. Es ist somit sichergestellt, daß selbst bei einer gewissen Verformung des Scheiders in den Rippenbereichen, wie sie beim Zusammenpressen der Elektrodenpakete auftritt, das Scheiderblatt nicht mit der positiven Elektrodenplatte in Berührung gelangen und dadurch oxidativ zerstört werden kann. Die Figur 2 zeigt darüber hinaus die bevorzugten Maßverhältnisse. Bei einer Scheiderblattdicke von 0,25 mm weisen die Rippen 2 eine Höhe von 0,75 mm und die Rippen 3, 3′ eine Höhe von 0,3 mm auf, so daß sich eine Scheidergesamtdicke von 1,3 mm ergibt. Der Abstand der Gegenrippen voneinander (gemessen von Rippenmitte zu Rippenmitte) beträgt 2,5 mm, der Abstand zwischen benachbarten Dreiergruppen von Rippen (gemessen von Rippenmitte zu Rippenmitte der mittleren Rippe) 13,2 mm; das Verhältnis der Abstände liegt somit bei 1:5,2. Gemessen jeweils am Fuß der Rippen ist die Breite der Rippen 2 und der Gegenrippen 3, 3′ jeweils etwa 0,6 mm. Wie oben bereits ausgeführt, kann die Kompressibilität und Federkraft des Scheiders u.a. durch den Abstand der Gegenrippen voneinander beeinflußt werden. Niemals darf aber eine Rippe Rücken an Rücken auf eine Gegenrippe stoßen, weil dann die Kompressibilität auf diejenige des Materials beschränkt wäre, welche äußerst gering ist. Nur durch die Biegeverformung ergeben sich bei dem erfindungsgemäßen Scheider die erforderliche Kompressibilität und Feder- bzw. Rückstellkraft.

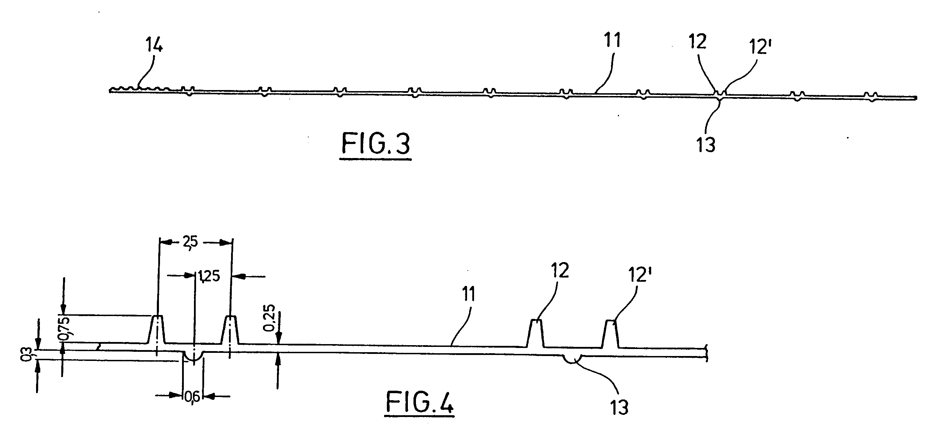

Die Figuren 3 und 4 zeigen eine andere Ausführungsform des erfindungsgemäßen Scheiders, bei welcher jeweils zwei paarweise angeordnete Rippen 12, 12′ einer Gegenrippe 13 zugeordnet sind. Auch hier verläuft die Gegenrippe 13 in der Mitte des Rippenpaars 12, 12′. Die Maßverhältnisse sind dieselben wie für die Ausführungsform der Figuren 1 und 2.

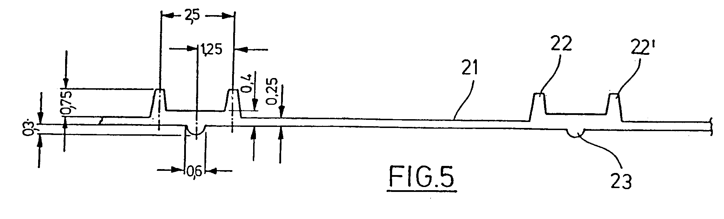

Bei der Ausführungsform der Figur 5 ist die Blattdicke im Vergleich zu dem außerhalb der Rippen liegenden Bereich 21 zwischen den paarweise angeordneten Rippen 22, 22′ gegenüber der einzelnen Rippe 23 verstärkt und beträgt 0,4 mm. Dadurch wird eine höhere Rückstellkraft erzielt.

Es ist gewünschtenfalls möglich, auf der Vorder- und/oder Rückseite des Scheiders weitere Rippen in den Zwischenräumen zwischen den Rippengruppen vorzusehen, ohne die elastische Verformung in den erfindungsgemäß ausgestalteten Bereichen zu beeinträchtigen. Insbesondere kann durch zusätzliche Rippen auf der Vorderseite verhindert werden, daß bei einer Verformung das Scheiderblatt mit der positiven Elektrodenplatte in Berührung kommt. Diese zusätzlichen Rippen können ihren Zweck auch dann erfüllen, wenn sie eine geringere Höhe als die anderen auf der Vorderseite vorgesehenen Rippen aufweisen.

Die Herstellung der erfindungsgemäßen Scheider kann in derselben Weise erfolgen wie bei konventionellen Polyethylenscheidern. Dabei wird die füllstoffhaltige Kunststoffmasse durch eine Schlitzdüse extrudiert und anschließend durch zwei Kalanderwalzen geführt, durch welche die Rippen erzeugt und das Scheiderblatt auf die gewünschte Dicke reduziert wird. Bei der Herstellung eines Scheiders gemäß den Figuren 1 und 2 könnte die Kalanderwalze für die Vorderseite gegenüber dem Stand der Technik unverändert bleiben, für die Rückseite wird jedoch eine abgewandelte Walze benötigt, um die paarweise angeordneten Gegenrippen zu erzeugen.

Versuche haben gezeigt, daß die erfindungsgemäßen Scheider die erforderliche Kompressibilität und Federkraft besitzen, um die bei der Fertigung auftretenden Dickenabweichungen der Elektrodenplatten und Scheider auszugleichen. Mit Hilfe dieser Scheider hergestellte Plattenpakete lassen sich deshalb ohne Abstandshalter in die Batteriekästen einsetzen; die Plattenpakete werden dabei jeweils soweit zusammengedrückt, daß sie sich in die entsprechenden Zellenabteile einschieben lassen und in diesen klemmend festsitzen.

## Patentansprüche

1. Scheider aus elastischem Kunststoff für Starterbatterien, welcher eine Blattstärke von etwa 0,15 bis 0,35 mm sowie auf beiden Seiten integral aus dem Kunststoff geformte, massive Rippen aufweist, wobei auf der jeweils der positiven Elektrodenplatte zugewandten Vorderseite des Scheiders eine Mehrzahl von Rippen (2, 12) angeordnet ist, deren Höhe größer als die Dicke des Scheiderblattes (1, 11) ist, während die Rippen (3, 13) auf der jeweils der negativen Elektrodenplatte zugewandten Rückseite des Scheiders eine geringere Höhe als die Rippen (2, 12) auf der Vorderseite besitzen, dadurch gekennzeichnet, daß den Rippen (2, 12) auf der Vorderseite Rippen (3, 13) auf der Rückseite versetzt jeweils so zugeordnet sind, daß eine Vorderseitenrippe (2) zwischen zwei paarweise angeordneten Rückseitenrippen (3, 3′) oder eine Rückseitenrippe (13) zwischen zwei paarweise angeordneten Vorderseitenrippen (12, 12′) verläuft, wobei der Abstand zwischen zwei paarweise angeordneten Rippen (3, 3′ bzw. 12, 12′) wesentlich kleiner ist als der Abstand zwischen den von jeweils drei einander zugeordneten Rippen (2, 3, 3′ bzw. 12, 12′, 13) gebildeten benachbarten Gruppen.

2. Scheider nach Anspruch 1, dadurch gekennzeichnet, daß die jeweils einzelne Rippe (2, 13) in der Mitte der auf der anderen Seite paarweise angeordneten Rippen (3, 3′; 12, 12′) verläuft.

3. Scheider nach Anspruch 1 oder 2, dadurch gekennzeichnet, daß die einzelnen Rippen (2, 13) auf der Vorder- oder Rückseite des Scheiders in gleichen Abständen voneinander verlaufen.

4. Scheider nach einem der Ansprüche 1 bis 3, dadurch gekennzeichnet, daß nur einem Teil der Vorder- und/oder Rückseitenrippen (2) ein Paar Gegenrippen (3, 3′) zugeordnet ist.

5. Scheider nach einem der Ansprüche 1 bis 4, dadurch gekennzeichnet, daß bei der Scheiderblattdicke von 0,15 bis 0,35 mm der Abstand von zwei paarweise angeordneten Rippen (3, 3′; 12, 12′), zwischen denen auf der anderen Seite des Scheiders eine Gegenrippe (2, 13) verläuft, etwa 1,2 bis 4 mm (gemessen von Rippenmitte zu Rippenmitte) beträgt.

6. Scheider nach einem der Ansprüche 1 bis 5, dadurch gekennzeichnet, daß das Verhältnis zwischen dem Abstand von zwei paarweise angeordneten Rippen (3, 3′ bzw. 12, 12′) und dem Abstand von zwei benachbarten Gruppen von jeweils drei einander zugeordneten Rippen (2, 3, 3′ bzw. 12, 12′, 13) 1:3 bis 11 beträgt).

7. Scheider nach Anspruch 5 oder 6, dadurch gekennzeichnet, daß bei einer Scheiderblattdicke von etwa 0,25 mm der Abstand zwischen zwei paarweise angeordneten Rippen etwa 2,5 mm und der Abstand von zwei benachbarten Gruppen von jeweils drei einander zugeordneten Rippen etwa 13 mm (gemessen von Rippenmitte zu Rippenmitte der mittleren Rippe) beträgt.

8. Scheider nach einem der Ansprüche 1 bis 7, dadurch gekennzeichnet, daß die Blattdicke zwischen den paarweise angeordneten Rippen (22, 22′) gegenüber der einzelnen Rippe (23) im Vergleich zu dem außerhalb der Rippen liegenden Bereich (21) verstärkt ist.

9. Scheider nach Anspruch 8, dadurch gekennzeichnet, daß die Blattdicke im verstärkten Bereich ca. 0,4 mm, außerhalb der Rippen aber nur ca. 0,25 mm beträgt.

10. Scheider nach einem der Ansprüche 1 bis 9, dadurch gekennzeichnet, daß er aus Polyethylen, Polypropylen, Polyvinylchlorid oder deren Mischungen besteht.

## Claims

1. Separator of flexible plastic for starter batteries, which has a sheet thickness of about 0.15 to 0.35 mm and solid ribs formed integrally from the plastic on both sides, a plurality of ribs (2, 12) of a height greater than the thickness of the separator sheet (1, 11) being arranged on the front side of the separator which in each case faces the positive electrode plate, whereas the ribs (3, 13) on the rear side of the separator which in each case faces the negative electrode plate have a smaller height than the ribs (2, 12) on the front side, characterised in that the ribs (2, 12) on the front side are respectively assigned ribs (3, 13) on the rear side offset in such a way that a front-side rib (2) runs between two rear-side ribs (3, 3') arranged in pairs, or a rear-side rib (13) runs between two front-side ribs (12, 12') arranged in pairs, the distance between two ribs (3, 3' or 12, 12') arranged in pairs being substantially less than the distance between the neighbouring groups formed by in each case three ribs (2, 3, 3' or 12, 12', 13) assigned to one another.

2. Separator according to Claim 1, characterised in that the respectively individual rib (2, 13) runs in the centre of the ribs (3, 3'; 12, 12') arranged in pairs on the other side.

3. Separator according to Claim 1 or 2, characterised in that the individual ribs (2, 13) on the front or rear side of the separator run at the same distances from one another.

4. Separator according to one of Claims 1 to 3, characterised in that only some of the front-side and/or rear-side ribs (2) are assigned a pair of counter-ribs (3, 3').

5. Separator according to one of Claims 1 to 4, characterised in that, with the separator sheet thickness of 0.15 to 0.35 mm, the spacing of two ribs (3, 3'; 12, 12') arranged in pairs, between which a counter-rib (2, 13) runs on the other side of the separator, is about 1.2 to 4 mm (measured from rib centre to rib centre).

6. Separator according to one of Claims 1 to 5, characterised in that the ratio between the spacing of two ribs (3, 3' or 12, 12') arranged in pairs and the spacing of two neighbouring groups of in each case three ribs (2, 3, 3' or 12, 12', 13) assigned to one another is 1:3 to 11.

7. Separator according to Claim 5 or 6, characterised in that, with a separator sheet thickness of about 0.25 mm, the distance between two ribs arranged in pairs is about 2.5 mm and the spacing of two neighbouring groups of in each case three ribs assigned to one another is about 13 mm (measured from rib centre to rib centre of the middle rib).

8. Separator according to one of Claims 1 to 7, characterised in that the sheet thickness between the ribs (22, 22'), arranged in pairs, opposite the individual rib (23) is increased in comparison with the region (21) lying outside the ribs.

9. Separator according to Claim 8, characterised in that the sheet thickness in the increased region is about 0.4 mm, but outside the ribs is only about 0.25 mm.

10. Separator according to one of Claims 1 to 9, characterised in that it consists of polyethylene, polypropylene, polyvinyl chloride or blends thereof.

## Revendications

1. Séparateur en matière plastique élastique pour batterie de démarrage, lequel est constitué d'un film d'une épaisseur d'environ 0,15 mm à 0,35 mm et muni sur ses deux faces de nervures massives incorporées au film lors du moulage de la matière plastique, tandis que, sur la face avant du séparateur orientée respectivement vers la plaque des électrodes positives, est disposée une pluralité de nervures (2, 12) dont la hauteur est supérieure à l'épaisseur du film séparateur (1, 11) alors que les nervures (3, 13) disposées sur la face arrière du séparateur respectivement orientées vers la plaque des électrodes négatives sont moins hautes que les nervures (2, 12) disposées sur la face avant, caractérisé en ce qu'aux nervures (2, 12) de la face avant correspondent des nervures (3, 13) de la face arrière et respectivement décalées de telle sorte qu'une nervure (2) de la face avant s'étend entre deux nervures (3, 3') disposées par paires sur la face arrière, ou qu'une nervure (13) de la face arrière s'étend entre deux nervures (12, 12') disposées par paires sur la face avant, la distance entre deux nervures (3, 3' ou 12, 12') disposées par paires étant sensiblement inférieure à la distance entre deux groupes adjacents formés de trois nervures (2, 3, 3' ou 12, 12', 13) en correspondance mutuelle.

2. Séparateur selon la revendication 1, caractérisé en ce que chacune des nervures isolées (2, 13) est placée au milieu de la distance séparant les nervures (3, 3', 12, 12') disposées par paires sur l'autre face du film.

3. Séparateur selon la revendication 1 ou 2, caractérisé en ce que les nervures isolées (2, 13) sur la face avant ou sur la face arrière du séparateur sont équidistantes entre elles.

4. Séparateur selon l'une des revendications 1 à 3, caractérisé en ce qu'une paire de contre-nervures (3, 3') est associée à une partie seulement des nervures (2) disposées sur la face avant et/ou sur la face arrière.

5. Séparateur selon l'une des revendications 1 à 4, caractérisé en ce que, pour une épaisseur du film du séparateur de 0,15 mm à 0,35 mm, la distance entre deux nervures (3, 3', 12, 12') disposées par paires et entre lesquelles s'étend, sur l'autre face du séparateur, une contre-nervure (2, 13), est égale à 1,2 à 4 mm (mesurée du centre d'une nervure à l'autre).

6. Séparateur selon l'une des revendications 1 à 5, caractérisé en ce que le rapport entre la distance de deux nervures disposées par paires (3, 3' ou 12, 12') et la distance de deux groupes adjacents de trois nervures respectivement associées (2, 3, 3' ou 12, 12', 13) est compris entre 1:3 et 1:11.

7. Séparateur selon la revendication 5 ou 6, caractérisé en ce que, pour une épaisseur du film du séparateur d'environ 0,25 mm, la distance entre deux nervures disposées par paires est égale à environ 2,5 mm et la distance entre deux groupes adjacents de respectivement trois nervures associées est égale à environ 13 mm (distance mesurée entre le milieu d'une nervure centrale et celui de l'autre nervure centrale).

8. Séparateur selon l'une des revendications 1 à 7, caractérisé en ce que l'épaisseur du film entre les nervures (22, 22') disposées par paires et la nervure isolée (23) est renforcée par rapport à la zone de film (21) située extérieurement aux nervures.

9. Séparateur selon la revendication 8, caractérisé en ce que l'épaisseur du film dans la zone renforcée est d'environ 0,4 mm mais de seulement 0,25 mm environ extérieurement aux nervures.

10. Séparateur selon l'une des revendications 1 à 9, carctérisé en ce qu'il est constitué en polyéthylène, en polypropylène, en polychlorure de vinyle ou en mélanges de ceux-ci.
